Europäisches Patentamt

European Patent Office

Office européen des brevets

(19)

(11) Veröffentlichungsnummer: **0 125 527**

**A2**

(12) **EUROPÄISCHE PATENTANMELDUNG**

(21) Anmeldenummer: **84104453.0**

(22) Anmeldetag: **19.04.84**

(51) Int. Cl.³: **A 47 J 41/02**

(30) Priorität: **09.05.83 DE 3316941**

(43) Veröffentlichungstag der Anmeldung:
**21.11.84 Patentblatt 84/47**

(84) Benannte Vertragsstaaten:
**AT BE CH DE FR GB IT LI LU NL SE**

(71) Anmelder: **Rotpunkt Dr. Anso Zimmermann**
**Industriestrasse**
**D-6434 Niederaula / Bad Hersfeld(DE)**

(72) Erfinder: **Zimmermann, Anso, Dr.**
**Seilerweg 34**
**D-6434 Niederaula(DE)**

(74) Vertreter: **Körber, Wolfhart, Dr. et al,**
**Patentanwälte Dipl.-Ing. H. Mitscherlich Dipl.-Ing. K.**
**Gunschmann Dr.rer.nat. W. Körber Dipl.Ing. J.**
**Schmidt-Evers Dipl.-Ing. W. Melzer Steinsdorfstrasse 10**
**D-8000 München 22(DE)**

(54) **Isolierkanne.**

(57) Es wird eine Isolierkanne (1) mit einem wärmeisolierenden Innenbehälter (2), einem diesen umgebenden Mantel (4) mit einem Kopfteil (5) und einem einschraubbaren verschlußstopfen (3) angegeben.

Der Ausgießer (7) im Kopfteil (5) ist als durchgehende Schnaupe ausgebildet. Das Innengewinde im Kopfteil (5) ist durch sich diametral gegenüberliegende über jeweils etwa 90° verlaufende Gewindeabschnitte gebildet, deren einer (9) im Bereich der die Schnaupe bildenden Öffnung (8) im ringförmigen Kopfteil (5) beiderseits der Öffnung etwa gleichmäßig ausgebildet ist. Außerhalb der Öffnung (8) kann an dem Ringabschnitt des Kopfteils (5) ein Element (12) angeformt und/oder eine zusätzliche Platte (13) zwecks Abdeckung des Ausgießers (7) vorgesehen sein.

Ein derartiger Kopfteil bzw. Mantel kann bei der Herstellung mittels "zusammenfallendem Kern" entformt werden. Insbesondere ist durch den schnaupenseitigen Gewindeschieber auch eine zumindest teilweise Entformung der Schnaupe durchführbar.

EP 0 125 527 A2

FIG.1

## ISOLIERKANNE

Die Erfindung betrifft eine Isolierkanne mit einem wärmeisolierenden Innenbehälter, einem diesen umgebenden Mantel mit einem Kopfteil aus Kunststoff oder dergleichen und einem in den Kopfteil einschraubbaren Verschlußstopfen zum dichten Verschließen des Innenbehälters, mit zwei nach innen vorspringenden über jeweils etwa $90^{\circ}$ verlaufenden sich diametral gegenüberliegenden Gewindeabschnitten im Kopfteil zur Aufnahme des Verschlußstopfens mit Außengewinde, mit einem am Kopfteil nach außen wegragend angeformten Ausgießer und mit gegebenenfalls einem dem Ausgießer diametral gegenüberliegenden am Kopfteil angeformten Griff.

Isolierkannen dieser Art sind handelsüblich. Dadurch, daß in dem Hals des Kopfteils nicht durchgehende Gewinde, sondern sich diametral gegenüberliegende und jeweils über etwa $90^{\circ}$ verlaufende Gewindeabschnitte vorgesehen sind, kann der Mantel bzw. dessen Kopfteil kostengünstig mittels des sog. Verfahrens mit zusammenfallendem Kern hergestellt werden. Dabei ist der Ausgießer als nach oben offene Rinne ausgebildet.

Um das Ausgießverhalten zu verbessern, ist es wünschenswert den Ausgießer als durchgehende Schnaupe auszubilden. Einer derartigen Ausbildung des Ausgießers als Schnaupe stehen jedoch fertigungstechnische Schwierigkeiten bei der Herstellung insbesondere der Entformung bei der Herstellung des Kopfteils aus Kunststoff entgegen. Wird nämlich eine Entformung mittels Einlegeteil durchgeführt, ist nur halbautomatische Abspritzung möglich, was teuer und daher unwirtschaftlich ist. Wird die geschlossene Schnaupe

in Ausgießrichtung entformt, sind nur bestimmte Ausführungsformen der Schnaupe möglich, die ungünstige Strömungseigenschaften und damit schlechtes Ausgießverhalten besitzen. Solche Isolierkannen hätten keine Vorteile bezüglich des Ausgießverhaltensgegenüber solchen mit rinnenartigem Ausgießer herkömmlicher Art.

Es ist daher Aufgabe der Erfindung, eine Isolierkanne der eingangs genanten Art so auszubilden, daß trotz Ausbildung mit Schnaupe eine kostengünstige Entformung mittels zusammenfallendem Kern möglich ist.

Die Aufgabe wird dadurch gelöst, daß der Ausgießer als durchgehende Schnaupe ausgebildet ist und einer der Gewindeabschnitte etwa gleichmäßig beiderseits der die Schnaupe bildenden Öffnung in dem ringförmigen Kopfteil verläuft.

Durch diese gegenüber herkömmlichen Isolierkannen um 90° versetzte Anordnung der Gewindeabschnitte wird es möglich, den schnaupenseitigen Gewindeschieber der Form auch zur Formung der schnaupenseitigen Öffnung in dem nunmehr durchgenenden ringförmigen Kopfteil zu verwenden, d.h. durch den schnaupenseitigen Gewindeschieber ist zumindest eine Teilentformung der Schnaupe möglich. Der gegebenenfalls verbleibende offene Bereich der Schnaupe kann durch eine zusätzliche Platte abgedeckt werden. Bei der Ausbildung der Schnaupe kann auch der die Öffnung begrenzende Ringabschnitt des Kopfteils nach außen hin durch ein angeformtes Element verlängert werden, so daß gegebenenfalls auch eine Schnaupe ohne zusätzliche Platte möglich ist.

Die Erfindung ermöglicht daher Isolierkannen, die herkömmlichen Porzellankannen ähnliche Schnaupen besitzen. Es werden also Isolierkannen möglich, die optisch im Ausgießerbereich von herkömmlichen Porzellankannen nicht unterscheidbar sind und daher mit herkömmlichem Porzellangeschirr verwendbar sind. Die Schnaupe ermöglicht dabei, daß der Kanneninhalt, z.B. Kaffee oder Tee, auch bei flachem Ausgießwinkel nicht über den Ausgießer überlaufen kann, da der die Öffnung oben begrenzende Ringabschnitt des Kopfteils, der auch den Gewindeabschnitt trägt, als Sperre wirkt. Dadurch wird sehr gutes Ausgießverhalten ermöglicht. Da eine Entformung nach außen nicht mehr notwendig ist, kann der Ausgießer mit Rücksicht auf gutes Ausgießverhalten gestaltet werden.

Die Erfindung wird anhand des in der Zeichnung dargestellten Ausführungsbeispiels näher erläutert. Es zeigen

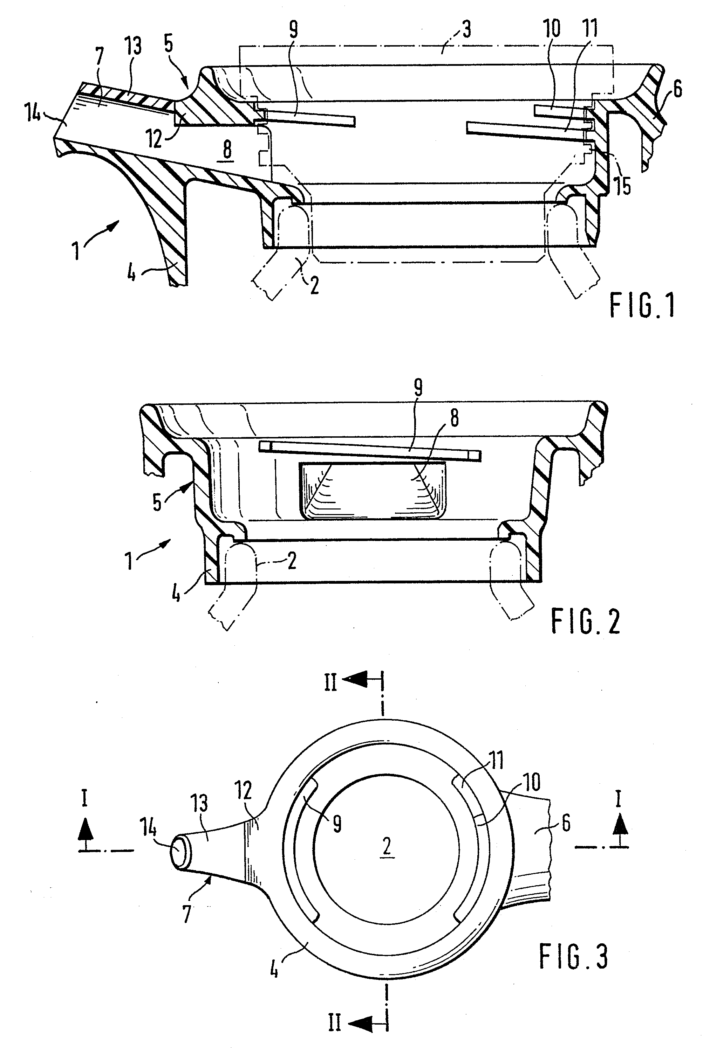

Fig. 1   in Schnittansicht durch den Ausgießer entsprechend dem Schnitt I-I in Fig. 3 den Kopfteil des Mantels einer Isolierkanne mit durchgehender Schnaupe,

Fig. 2   den Schnitt II-II in Fig. 3 ,

Fig. 3   in Aufsicht eine Isolierkanne gemäß der Erfindung.

In den Figuren ist lediglich der obere Teil einer Isolierkanne 1 dargestellt, wobei der wärmeisolierende Innenbehälter 2, wie ein Dewargefäß lediglich schematisch durch Strichlinien angedeutet ist. Ein Mantel 4 umgibt den Innenbehälter 2 im wesentlichen vollständig und läßt nach oben im Bereich des Kopfteils 5 des Mantels 4 eine Öffnung frei, in die ein Verschlußstopfen 3 zum dichten Verschließen des Innenbehälters 2 einschraubbar ist. Dichtungen aus elastischem Dichtungsmaterial sind üblicherweise zwischen dem Innenbehälter 2 und dem Kopfteil 5 sowie am Verschlußstopfen 3 derart vorgesehen, daß ein Lecken einer Flüssigkeit im Innenbehälter nach außen sicher verhindert ist. Derartige Dichtungen sind allgemein üblich und hier nicht dargestellt.

An dem Kopfteil ist an einer Seite nach außen wegragend ein Griff 6 angeformt. Diametral gegenüberliegend ist an dem Kopfteil 5 ein Ausgießer 7 angeformt.

Der Ausgießer 7 ist als durchgehende Schnaupe ausgebildet, d.h. er durchsetzt den als vollständigen Ring ausgebildeten Kopfteil 5 über eine Durchgangsöffnung 8. Das Gegengewinde im Kopfteil 5 für das Außengewinde 15 des Verschlußstopfens 3 weist sich diametral gegenüberliegende über jeweils etwa $90^{\circ}$ verlaufende nach innen vorspringende Gewindeabschnitte auf. Einer der Gewindeabschnitte, nämlich der Gewindeabschnitt 9 ist etwa gleichmäßig beiderseits der Öffnung 8 oberhalb dieser in dem Kopfteil 5 ausgebildet. Der diametral gegenüberliegende Gewindeabschnitt, der hier aus einem oberen und einem unteren Gewindegang 10 bzw. 11 besteht, ist entsprechend im Bereich des Griffs 6 im Kopfteil 5 nach innen vorspringend ausgebildet.

Im Bereich der Öffnung 8 ist an der Außenseite des Ringabschnitts des Kopfteils 5 ein nach außen vorspringendes Element 12 angeformt, das die Begrenzung der Öffnung 8 nach außen verlängert und damit den Ausgießer 7 weiter in Richtung auf die Ausgießöffnung 14 hin abdeckt. Ferner kann der verbleibende offene Bereich der Schnaupe zusätzlich durch eine Platte 13 aus Kunststoff oder dergleichen abgedeckt werden. Diese Platte 13 kann aufgeklebt werden, sie kann auch einrastbar sein. Bei Gestaltung dieser Platte 13 aus einem andersfarbigen
Kunststoff können zusätzliche optische Effekte erreicht
werden.

Durch die Anordnung des Gewindeabschnitts 9 im Bereich
der Öffnung 8 kann der Mantel oder zumindest dessen
Kopfteil 5 mittels einer Technik hergestellt werden,
die unter der Bezeichnung zusammenfallender Kern bekannt
ist. Der für den schnaupenseitigen Gewindeabschnitt 9
vorgesehene schnaupenseitige Gewindeschieber ermöglicht
nämlich bei geeigneter Ausbildung eine Teilentformung des
Ausgießers 7 zumindest im Bereich der Öffnung 8 und
gegebenenfalls auch des Elements 12. Der außerhalb der
Öffnung 8 bzw. des Elements 12 liegende Abschnitt des
Ausgießers 7 kann in herkömmlicher Weise entformt werden.
Es sei erwähnt, daß auch der griffseitige Gewindeabschnitt mittels eines ähnlichen griffseitigen Gewindeschiebers entformt wird.

Auf diese Weise kann eine Isolierkanne mit einem Mantel
mit geschlossener Schnaupe auf kostengünstige Weise
gefertigt werden.

Durch die Ausbildung des Ausgießers 7 als geschlossene
Schnaupe in der erfindungsgemäßen Weise ist es möglich
Isolierkannen zu schaffen, deren durchgehende Schnaupe
weitestgehend der einer herkömmlichen Porzellankanne
ähnlich ist, wobei das Ausgießverhalten der Isolierkanne ohne besondere Rücksichtnahme auf die Entformbarkeit mit besonderer Berücksichtigung des Ausgießverhaltens gestaltet werden kann. Ferner bildet der
geschlossene den Gewindeabschnitt 9 tragende ringförmige
Kopfteil 5 im Bereich oberhalb der Öffnung 8 eine

Sperre, weshalb auch bei flachem Ausgießwinkel, d.h. sehr voller Isolierkanne, ein Überlaufen der Flüssigkeit über den Ausgießer 7 vermieden ist.

Selbstverständlich sind noch andere Ausführungsformen möglich, beispielsweise kann der Kopfteil ein gesonderter Teil des Mantels sein. Ferner ist die Querschnittsfläche der Öffnung 8 nicht notwendigerweise im wesentlichen rechteckförmig sondern sie kann beliebigen Querschnitt haben, beispielsweise ovalen oder kreisförmigen. Ferner muß der Griff 6 nicht notwendigerweise vorgesehen und auch nicht notwendigerweise angeformt sein.

Dr. Anso Zimmermann
Industriestraße
6434 Niederaula/Bad Hersfeld
------------------------------

ANSPRÜCHE

1. Isolierkanne mit einem wärmeisolierenden Innenbehälter, einem diesen umgebenden Mantel mit
   einem Kopfteil aus Kunststoff oder dergleichen
   und einen in den Kopfteil einschraubbaren Verschlußstopfen zum dichten Verschließen des Innenbehälters,
   mit zwei nach innen vorspringenden über jeweils
   etwa 90$^{\circ}$ verlaufenden sicn diametral gegenüberliegenden Gewindeabschnitten im Kopfteil zur
   Aufnahme des Verschlußstopfens mit Außengewinde,
   mit einem am Kopfteil nacn außen wegragenden angeformten Ausgießer und

mit gegebenenfalls einem dem Ausgießer diametral
gegenüberliegenden am Kopfteil angeformten Griffs,
dadurch gekennzeichnet,
daß der Ausgießer (7) als durchgehende Schnaupe ausgebildet ist und einer der Gewindeabschnitte (9)
etwa gleichmäßig beiderseits der die Schnaupe bildenden Öffnung (8) in dem ringförmigen Kopfteil (5) verläuft.

2. Isolierkanne nach Anspruch 1,
dadurch gekennzeichnet,
daß an der Außenseite des den Gewindeabschnitt (9)
im Bereich der Öffnung (8) tragenden Ringabschnitts
des Kopfteils (5) der Ausgießer (7) zusätzlich durch
eine Platte (13) abgedeckt ist.

3. Isolierkanne nach Anspruch 1 oder 2,
dadurch gekennzeichnet,
daß an der Außenseite des den Gewindeabschnitt (9)
im Bereich der Öffnung (8) tragenden Ringabschnitts
des Kopfteils (5) der Ausgießer (7) durch ein
nach außen wegragendes an den Ringabschnitt des
Kopfteils (5) angeformtes Element (12) über den
Ringabschnitt hinaus abgedeckt ist.

0125527

1/1

FIG.1

FIG.2

FIG.3